# EUROPÄISCHE PATENTSCHRIFT

(11) **EP 2 476 970 B1**
(45) Veröffentlichungstag und Bekanntmachung des Hinweises auf die Patenterteilung: **31.08.2016**
(21) Anmeldenummer: 12000193.8
(22) Anmeldetag: 13.01.2012
(51) Int. Cl.: F24H 9/12, F24H 9/00, F28F 9/02, F28D 20/00

(54) **Fluidspeicher**
Fluid storage device
Réservoir de fluide

(30) Priorität: 17.01.2011 AT 622011
(43) Veröffentlichungstag der Anmeldung: 18.07.2012
(73) Patentinhaber: Forstner, Maximilian, 6971 Hard (AT)
(72) Erfinder: Forstner, Maximilian, 6971 Hard (AT)
(74) Vertreter: Fechner, Thomas

(56) Entgegenhaltungen:
- WO-A2-2009/013781
- DE-A1- 19 846 364
- US-A- 4 385 625
- US-A- 5 054 437

## Beschreibung

Die vorliegende Erfindung betrifft einen Fluidspeicher zum geschichteten Speichern zumindest einer Wärmeträgerflüssigkeit in einem Speicherhohlraum des Fluidspeichers, wobei im Speicherhohlraum des Fluidspeichers zumindest ein Überströmelement zur Einbringung und/oder Entnahme von Wärmeträgerflüssigkeit in und/oder aus dem Speicherhohlraum angeordnet ist und das Überströmelement zumindest einen Außenanschluss zur Verbindung des Überströmelements mit außerhalb des Speicherhohlraums, insbesondere außerhalb des Fluidspeichers, liegenden Leitungen aufweist und das Überströmelement zusätzlich eine Vielzahl von Überströmöffnungen zur Einbringung der Wärmeträgerflüssigkeit aus dem Überströmelement in den Speicherhohlraum und/oder zur Entnahme der Wärmeträgerflüssigkeit aus dem Speicherhohlraum in das Überströmelement aufweist, wobei die Überströmöffnungen in den Speicherhohlraum münden, und alle Überströmöffnungen des Überströmelements, in einer Betriebsstellung des Fluidspeichers gesehen, zwischen zwei horizontalen Ebenen angeordnet sind, wobei der vertikale Abstand dieser beiden horizontalen Ebenen zueinander höchstens so groß ist, wie der maximale Innendurchmesser des Außenanschlusses des Überströmelementes .

Fluidspeicher werden beim Stand der Technik z.B. als Wärmespeicher, Kältespeicher, Energiespeicher oder Pufferspeicher eingesetzt. Letztendlich geht es bei gattungsgemäßen Fluidspeichern immer darum, thermische Energie oder Kälte zu speichern und zu verwalten. Als Speichermedium dienen Wärmeträgerflüssigkeiten wie z.B. Wasser, Glykolgemische, Sole und dergleichen. Die im Speicherhohlraum des Fluidspeichers vorhandene Wärmeträgerflüssigkeit hat auf Grund von Einbringung und Entnahme der Wärmeträgerflüssigkeit in den Speicherhohlraum nicht über die gesamte vertikale Erstreckung des Speicherhohlraums dieselbe Temperatur. Es ist viel mehr Ziel dieser Fluidspeicher, dass in ihrem Speicherhohlraum die Wärmeträgerflüssigkeit horizontal geschichtet, also in horizontalen Schichten verschiedener Temperaturen gespeichert wird. Daher spricht man auch von Schichtspeichern. In diese wird einerseits je nach Betrieb einer Wärme- oder Kältequelle Wärme bzw. Kälte durch entsprechende Einbringung von Wärmeträgerflüssigkeit in den Speicherhohlraum eingespeichert. Andererseits wird je nach Bedarf auf der Verbraucherseite aber auch Wärme bzw. Kälte durch Entnahme von Wärmeträgerflüssigkeit entnommen. Zur Einbringung und/oder Entnahme von Wärmeträgerflüssigkeit in den Speicherhohlraum sind sogenannte Überströmelemente vorgesehen. Diese weisen zumindest einen Außenanschluss und mehrere Überströmöffnungen auf. Der Außenanschluss dient der Verbindung des Überströmelements mit außerhalb des Speicherhohlraums, meist auch außerhalb des Fluidspeichers, liegenden Leitungen zur Wärme- oder Kältequelle bzw. auch zum jeweiligen Verbraucher. Durch die Überströmöffnungen hingegen tritt die Wärmeträgerflüssigkeit aus dem Überströmelement in den Speicherhohlraum aus oder umgekehrt.

Es sind verschiedene Arten von Überströmelementen durch offenkundige Vorbenutzung bekannt. Eine davon weist eine Abfolge von vertikal übereinander angeordneten Überströmöffnungen auf. Es hat sich gezeigt, dass durch eine solche Art von Überströmelementen bei Einbringung und/oder Entnahme von Wärmeträgerflüssigkeit in und/oder aus dem Speicherhohlraum die Schichtung im Speicherhohlraum sehr stark gestört wird.

Eine gewisse Verbesserung der Schichtung im Speicherhohlraum eines Fluidspeichers kann durch das Vorsehen von Überströmelementen mit im Wesentlichen in einer horizontalen Ebene liegenden Überströmöffnungen erreicht werden. Aus der Schrift US 5,054,437 A gehen Fluidspeicher der eingangs genannten Art mit verschieden ausgestalteten Überströmelementen hervor. Auch in der DE 198 46 364 A1 ist ein Fluidspeicher mit Überströmelementen mit einer Vielzahl von in einer horizontalen Ebene angeordneten Überströmöffnungen gezeigt. Aus der Schrift WO 2009/013781 A2 gehen Fluidspeicher der eingangs genannten Art mit Überströmelementen, welche schlitzförmige Überströmöffnungen aufweisen, hervor.

Aufgabe der Erfindung ist es, einen Fluidspeicher dahingehend zu verbessern, dass die Schichtung bei der Einbringung und/oder Entnahme von Wärmeträgerflüssigkeit aus dem Speicherhohlraum bzw. in den Speicherhohlraum möglichst wenig gestört wird.

Dies wird erfindungsgemäß erreicht, dass im Speicherhohlraum zumindest ein Strömungsleitkörper angeordnet ist, welcher, in der Betriebsstellung gesehen, an seinem oberen Ende und seinem unteren Ende jeweils eine Öffnung aufweist und von einer ansonsten geschlossenen, in der Betriebsstellung in Vertikalrichtung längs erstreckten Strömungsleitkörperwand umgeben ist.

Die Strömungsleitkörper beschleunigen und lenken den thermischen Aufstieg von warmer Wärmeträgerflüssigkeit im Speicherhohlraum, sodass sich relativ rasch die gewünschte Schichtung ausbilden kann.

Alle Überströmöffnungen sind auf einen, in Betriebsstellung des Fluidspeichers gesehen, möglichst klein umgrenzten vertikalen Bereich beschränkt. Dabei ist vorgesehen, dass dieser vertikale Bereich, in dem sich die Überströmöffnungen befinden, nicht größer ist als der maximale Innendurchmesser des jeweiligen Außenanschlusses des Überströmelementes. Der maximale Innendurchmesser des Außenanschlusses ist dabei der größte, am inneren Öffnungs- bzw. Strömungsquerschnitt des Außenanschlusses messbare Durchmesser. In der Regel sind die Öffnungs- bzw. Strömungsquerschnitte der Außenanschlüsse kreisförmig. Wenn nicht, so ist der maximale Innendurchmesser im Bereich der größten Ausdehnung des Öffnungs- bzw. Strömungsquerschnitts des Außenanschlusses zu messen. Durch die Bezugnahme auf den maximalen Innendurchmesser des Außenanschlusses wird eine an die jeweilige Leistung des Überströmelementes angepasste Maßnahme ergriffen, durch die sichergestellt ist, dass die Schichtung im Fluidspeicher weder bei der Einbringung noch bei der Entnahme der Wärmeträgerflüssigkeit aus dem Speicherhohlraum wesentlich gestört wird. Bei den zwei horizontalen Ebenen, zwischen denen alle Überströmöffnungen des Überströmelements angeordnet sind, handelt es sich in der Regel um gedachte Ebenen. Man könnte auch sagen, dass der Abstand zwischen der Oberkante, der in Betriebsstellung gesehen obersten Überströmöffnung des Überströmelementes und der Unterkante der, in Betriebsstellung gesehen, untersten Überströmöffnung des Überströmelementes maximal die genannten Werte einnimmt.

Die Überströmelemente können auch als Schichtweichen bezeichnet werden. Unter einem Außenanschluss des Überströmelementes wird die von der Wärmeträgerflüssigkeit durchströmbare Verbindung des Überströmelementes mit den vorzugsweise außerhalb des Speicherhohlraums liegenden Zu- oder Abführleitungen verstanden. Das Überströmelement befindet sich, günstigerweise zumindest größtenteils, im Speicherhohlraum. In der Regel sind der oder die Außenanschlüsse der einzige Teil des jeweiligen Überströmelements, welche nach außen in den Bereich außerhalb des Speicherhohlraums reichen. Erfindungsgemäße Fluidspeicher erlauben es, zeitlich befristet Wärme oder Kälte in Form entsprechender Wärmeträgerflüssigkeit mit der Absicht oder zumindest der Option, das Eingelagerte zu einem späteren Zeitpunkt wieder für den Gebrauch zu entnehmen, zu speichern. Man könnte entsprechende Fluidspeicher auch als Zwischenspeicher, Puffer oder Vorrat bezeichnen. Der Fluidspeicher dient jedenfalls dem Ausgleich von zeitlichen Unterschieden zwischen Zufluss bzw. Angebot und Abfluss bzw. Nachfrage an entsprechender Wärme bzw. Kälte. Als Wärmeträgerflüssigkeit kommen alle beim Stand der Technik für diesen Einsatzzweck bekannten Flüssigkeiten wie z.B. Wasser, Glykolgemische, Sole oder dergleichen in Frage. Mit erfindungsgemäßen Fluidspeichern können unterschiedlichste Aufgabenstellungen gelöst werden. Es kann sich z.B. um Wärmespeicher mit einem integrierten Brauchwassererwärmer und z.B. auch mit einem Solartauscher handeln, welche dazu dienen, die im Heizungswasser gespeicherte Wärme bzw. Energie gleichzeitig zur Erwärmung des Brauchwassers zu verwenden. Solche Fluidspeicher werden auch als Kombispeicher bezeichnet. Es ist auch die Einbindung mehrerer Wärmeerzeuger bzw. -quellen in erfindungsgemäße Fluidspeicher möglich. Erfolgt die Brauchwassererwärmung mit einer Wellrohrtauscherwendel, so spricht man z.B. von einem Frischwasserspeicher oder Hygienespeicher, in Kombination mit dem Heizsystem von einem Hygienesystemspeicher. Das Volumen des Speicherhohlraums erfindungsgemäßer Fluidspeicher liegt günstigerweise im Bereich zwischen 100 Liter und 100 000 Liter, vorzugsweise im Bereich zwischen 300 Liter und 10 000 Liter. Die Überströmelemente bzw. Schichtweichen verlangsamen die durch Pumpen im angeschlossenen Leitungssystem verursachte Fließdynamik der Wärmeträgerflüssigkeit so weit, dass im Speicherhohlraum eine, von der Strömungsdynamik unbeeinflusste thermische Einschichtung der Wärmeträgerflüssigkeit erfolgt. Dies gilt auch für die Entnahme. Der Vollständigkeit halber wird darauf hingewiesen, dass unter einer Schichtung bzw. einem geschichteten Speichern, in Betriebsstellung des Fluidspeichers gesehen, hier immer eine horizontale Einschichtung verstanden wird.

Ziel der Überströmelemente ist es, die Strömungsdynamik im Speicherhohlraum so weit abzubauen, dass sich im Speicher eine reine Thermik ausbilden kann, bei der wärmere Wärmeträgerflüssigkeit aufsteigt und kältere Wärmeträgerflüssigkeit absinkt. Diese Thermik ist ein sehr langsamer Prozess, welcher durch entsprechende Strömungsdynamik nicht gestört werden soll. Die Wärmeträgerflüssigkeit sollte bis zuletzt möglichst auf demselben Temperaturniveau genutzt werden können, wie sie eingebracht wurde. Erst durch eine funktionierende thermische Schichtung im Speicherhohlraum wird dies möglich. Die Überströmelemente können überall dort eingesetzt werden, wo es gilt, Strömungsdynamik gezielt abzubauen.

Bevorzugte Ausgestaltungsformen der Erfindung sehen vor, dass das Überströmelement einen Innenhohlraum aufweist, in den sowohl der Außenanschluss, vorzugsweise alle Außenanschlüsse, als auch alle Überströmöffnungen münden. Im Sinne der optimalen horizontalen Einschichtung ist dabei günstigerweise vorgesehen, dass der Innenhohlraum abgesehen von den Überströmöffnungen und dem Außenanschluss oder den Außenanschlüssen von einer geschlossenen Außenwand des Überströmelements umgeben ist. Grundsätzlich ist es denkbar, die Außenwand des jeweiligen Überströmelements aus verschiedenen Materialien herzustellen. Bevorzugte Ausgestaltungsformen sehen vor, dass die Außenwand Kunststoff, vorzugsweise Polypropylen, oder Stahl, vorzugsweise Edelstahl, aufweist oder daraus besteht. Bezüglich der Dimensionierung der Überströmöffnungen und des Innenhohlraums des Überströmelementes sehen bevorzugte Ausgestaltungsformen vor, dass die Summe der Flächen aller Überströmöffnungen zumindest 3 mal und höchstens 5 mal so groß ist, wie die größte, in einer Ebene normal zur Strömungsrichtung durch den Innenhohlraum des Überströmelements messbare Querschnittsfläche des Innenhohlraums. Hierdurch wird eine besonders strömungsberuhigte Einschichtung bzw. Entnahme ermöglicht.

Das Überströmelement kann genau einen Außenanschluss oder genau zwei Außenanschlüsse aber auch noch mehr Außenanschlüsse aufweisen. Besonders bevorzugte Ausgestaltungsformen der Erfindung sehen vor, dass das Überströmelement zumindest bereichsweise, vorzugsweise vollständig, als, vorzugsweise zumindest abschnittsweise kreisringförmige, Rohrleitung ausgebildet ist. Es sind aber auch andere Querschnittsformen des Überströmelementes möglich. Die Überströmelemente können, je nach geforderter Leistung bzw. nach gefordertem Massenstrom gestaffelt, dimensioniert werden, bevorzugt sind Rohrdimensionen zwischen DN 40 und DN 300 vorgesehen. Die Anzahl der Überströmöffnungen und ihre Dimensionen werden leistungsbezogen berechnet. Damit die außen zum Fluidspeicher hin oder von diesem weg führenden Anschlussleitungen nicht zwangsläufig in der Höhe des jeweils anzuschließenden Überströmelementes angeordnet sein müssen, sehen bevorzugte Ausgestaltungsformen der Erfindung vor, dass das Überströmelement zumindest einen, in der Betriebsstellung gesehen, zumindest auch vertikal verlaufenden Leitungsabschnitt aufweist, an dem der Außenanschluss oder einer der Außenanschlüsse angeordnet ist, wobei dieser Leitungsabschnitt, abgesehen von dem Außenanschluss oder den Außenanschlüssen, von einem vollständig geschlossenen Bereich der Außenwand des Überströmelements umgeben ist.

Weitere Merkmale und Einzelheiten erfindungsgemäßer Ausführungsbeispiele werden anhand der nachfolgenden Figurenbeschreibung erläutert. Es zeigen:
- Fig. 1: eine erste verwendbare Variante eines Überströmelementes;
- Fig. 2: eine zweite verwendbare Variante eines Überströmelementes;
- Fig. 3: eine Ausführungsform eines Fluidspeichers;
- Fig. 4: die beiden Überströmelemente aus Fig. 3;
- Fig. 5: ein erstes erfindungsgemäßes Ausführungsbeispiel eines Fluidspeichers;
- Fig. 6: die Überströmelemente sowie den Strömungsleitkörper aus Fig. 5;
- Fig. 7: ein zweites Ausführungsbeispiel eines erfindungsgemäßen Fluidspeichers;
- Fig. 8: wiederum die Überströmelemente und Strömungsleitkörper aus Fig. 8;
- Fig. 9: eine Ausführungsform eines Fluidspeichers
- Fig. 10: wiederum die Überströmelemente gemäß Fig. 9.
- Fig. 11: eine perspektivische Darstellung einer alternativen Ausgestaltungsvariante eines erfindungsgemäßen Überströmelementes;
- Fig. 12 und 13: Darstellungen zum Einbau des Überströmelementes gem. Fig. 11 in einen Fluidspeicher;
- Fig. 14 und 15: Darstellungen zur Verwendung von zusätzlichen Lochscheiben zur Strömungslenkung;
- Fig. 16 und 17: Darstellungen zu einer bevorzugten Form der Befestigung des Überströmelementes im Speicherhohlraum des Fluidspeichers;
- Fig. 18 bis 23: alternative Ausgestaltungsformen von Überströmelementen, wie sie in Fluidspeichern eingesetzt werden können und
- Fig. 24 bis 27: beispielhaft dargestellte Einsatzformen der Überströmelemente gemäß der Fig. 18 bis 23.

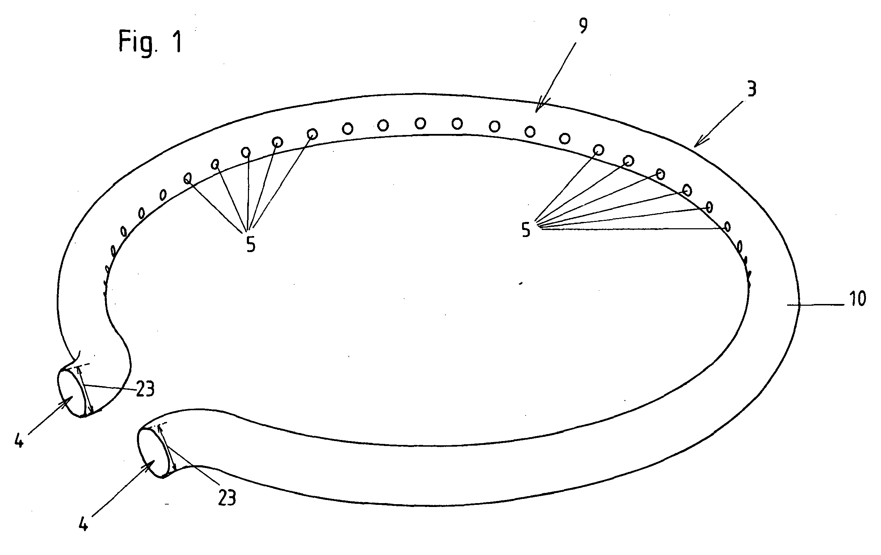

Fig. 1 zeigt eine bevorzugte Ausgestaltungsform eines Überströmelementes 3. Dieses weist eine rohrförmige Außenwand 10 auf, welche die beiden Außenanschlüsse 4, an die außerhalb des Fluidspeichers 1 und insbesondere außerhalb des Speicherhohlraums 2 angeordnete Zu- und Ableitungen angeschlossen werden können, miteinander verbindet. Im gezeigten ersten Ausführungsbeispiel ist die das Überströmelement 3 bildende Rohrleitung im Wesentlichen kreisförmig gebogen ausgebildet. Die Überströmöffnungen 5 dienen dazu, dass Wärmeträgerflüssigkeit aus dem Speicherhohlraum 2 bei der Entnahme in den Innenhohlraum 9 des Überströmelementes 3 eintreten kann. Beim Einschichten bzw. Einbringen von Wärmeträgerflüssigkeit in den Speicherhohlraum 2 tritt die Wärmeträgerflüssigkeit durch die Überströmöffnungen 5 aus dem Überströmelement 3 in den Speicherhohlraum 2 aus. Die Außenwand 10 ist abgesehen von den Überströmöffnungen 5 und den Außenanschlüssen 4 vollständig geschlossen ausgebildet. Die Überströmöffnung 5 wie auch die Außenanschlüsse 4 münden jeweils in den Innenhohlraum 9 des Überströmelementes 3. Ob eine Einbringung oder eine Entnahme von Wärmeträgerflüssigkeit über die Überströmöffnungen 5 erfolgt oder die Wärmeträgerflüssigkeit durch den Innenhohlraum 9 im Wesentlichen vom einen Außenanschluss 4 zum anderen Außenanschluss 4 hindurchströmt, kann durch Anlegen entsprechender Drücke gezielt gesteuert werden. Diese verschiedenen Strömungsmöglichkeiten erklären auch die Bezeichnung des Überströmelementes 3 als Schichtweiche. Im gezeigten, bevorzugten Ausführungsbeispiel gemäß Fig. 1 weisen alle Überströmöffnungen 5 nach innen in Richtung Zentrum des von der Außenwand 10 gebildeten Kreisbogens. Dies muss aber nicht zwingend so sein.

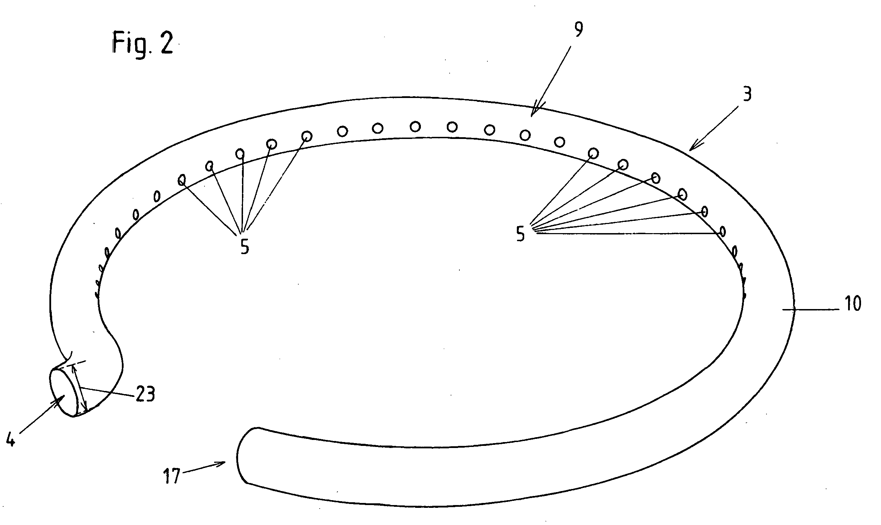

Fig. 2 zeigt ebenfalls ein Überströmelement 3. Dies entspricht in weiten Teilen dem Ausführungsbeispiel gemäß Fig. 1. Als Unterschied weist dieses Überströmelement 3 jedoch nur einen Außenanschluss 4 auf. An dem, diesem gegenüberliegenden Ende der rohrförmigen Außenwand 10 befindet sich ein geschlossenes Ende 17.

Mit 23 ist jeweils der Innendurchmesser des jeweiligen Außenanschlusses 4 des Überströmelementes 3 bezeichnet. Es handelt sich dabei um den Durchmesser des für die Durchströmung relevanten inneren Öffnungs- bzw. Durchströmquerschnittes des jeweiligen Außenanschlusses 4. In den gezeigten Ausführungsbeispielen sind diese Durchströmquerschnitte jeweils kreisrund ausgebildet, so dass der Innendurchmesser 23 immer der maximale Innendurchmesser ist. Weiters besitzen in der Regel alle Außenanschlüsse 4 eines jeweiligen Überströmelementes 3 denselben maximalen Innendurchmesser 23. Hiervon sind aber Abweichungen denkbar. Zum einen muss die innere Durchströmöffnung des Außenanschlusses 4 nicht zwingend einen kreisrunden Querschnitt haben. In diesem Fall ist dann eben im Sinne der Erfindung der maximale, also größte Innendurchmesser 23 dieses unrunden Querschnittes der Durchströmöffnung heranzuziehen. Theoretisch ist es auch denkbar, dass die Außenanschlüsse 4 eines Überströmelementes 3 unterschiedliche innere Durchströmquerschnitte haben. Dann ist im Sinne der Erfindung der größte maximale Innendurchmesser 23 der Außenanschlüsse 4 des jeweiligen Überströmelementes 3 heranzuziehen.

Die Außenwand 10 der Überströmelemente 3 kann aus unterschiedlichsten Materialien gefertigt sein. Es kann sich z.B. um Kunststoff, insbesondere Polypropylen handeln. Es ist aber genau so gut denkbar, Metall wie z.B. Stahl oder Edelstahl zur Herstellung der Außenwand 10 des Überströmelementes 3 zu verwenden.

In den nachfolgend besprochenen Darstellungen sind erfindungsgemäße Ausgestaltungsformen von Fluidspeichern 1 und in jeweils separaten Darstellungen, deren Überströmelemente 3 ohne den jeweiligen Fluidspeicher 1 dargestellt. Es handelt sich durchwegs um durchsichtige Darstellungen, um die im Speicherhohlraum 2 angeordneten Überströmelemente 3 und Strömungsleitkörper 13 in ihrer Lage relativ im Speicherhohlraum 2 darstellen zu können. Alle Fluidspeicher 1 sind in Betriebsstellung dargestellt. Die Wärmeträgerflüssigkeit wird in dieser Betriebsstellung in horizontalen Schichten eingeschichtet bzw. entnommen. Alle gezeigten Ausführungsbeispiele der Fluidspeicher 1 weisen eine Fluidspeicheraußenwand 20 auf, welche den Speicherhohlraum 2 ummantelt und nach außen abschließt. Weiters sind jeweils Entlüftungen 18 und Entleerungsöffnungen 19 vorhanden. Dies ist an sich Stand der Technik und muss nicht weiter erläutert werden. Zusätzlich beim Stand der Technik an sich bekannte Einbauten solcher Fluidspeicher wie z.B. Wärmetauscher und dergleichen, sind zur Vereinfachung der Darstellung jeweils nicht eingezeichnet, können aber, wie beim Stand der Technik an sich bekannt, ausgeführt sein.

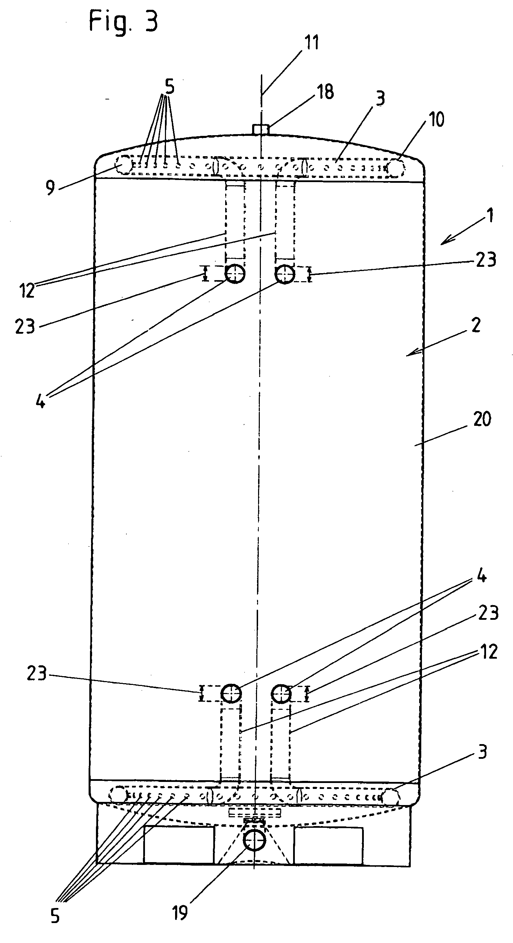

In Fig. 3 ist eine Ausführungsform eines Fluidspeichers 1 in Form eines Wärmespeichers bzw. Energiespeichers dargestellt. Solche Wärme- bzw. Energiespeicher sorgen im Heizsystem für einen Massen- und Druckausgleich. In ihrem Speicherhohlraum 2 herrscht optimalerweise eine möglichst ungestörte horizontale Schichtung auf Grund des Dichteunterschiedes der heißen und kalten Wärmeträgerflüssigkeit vor. Im oberen Bereich befindet sich die warme Vorlaufwärmeträgerflüssigkeit. Im unteren Bereich die kältere Rücklaufwärmeträgerflüssigkeit. Damit der thermisch bedingte Dichteunterschied und damit die horizontale Temperaturschichtung innerhalb des Speicherhohlraums 2 zustande kommt und nicht gestört wird, müssen die Massenströme möglichst kontrolliert erfolgen. Die Dynamik bei Einbringung und/oder Entnahme von Wärmeträgerflüssigkeit aus dem Speicherhohlraum 2 soll mittels der Überströmelemente 3 möglichst vollständig abgebaut werden, damit die Schichtung nicht gestört wird. Der Vorteil hiervon ist, dass ein an den Fluidspeicher 1 angeschlossener Wärme- oder Kälteerzeuger konstanter betrieben werden kann und nicht immer nachgeregelt werden muss, was insgesamt zu einer Energieeinsparung in einem Heiz- bzw. Kühlsystem führt. Das Überströmelement 3 dient in diesem wie auch in anderen Ausführungsbeispielen bevorzugt als Schichtweiche und unterstützt den Massen- und Druckausgleich.

Um die Schichtung im Speicherhohlraum 2 bei Einbringung und/oder Entnahme von Wärmeträgerflüssigkeit nicht zu stören und die Strömungsdynamik möglichst vollständig abzubauen, sind im Ausführungsbeispiel gemäß Fig. 3 zwei Überströmelemente 3 vorgesehen. Eines am oberen Ende des Speicherhohlraums 2 und eines an dessen unteren Ende. Die Außenanschlüsse 4 des oberen Überströmelementes 3 können z.B. an einen Vorlauf eines Heizkreises und einen Vorlauf zur Ladung also ein von einer Wärmequelle bzw. einem Wärmeerzeuger kommenden Vorlauf angeschlossen werden. Im gezeigten Ausführungsbeispiel weisen das obere Überströmelement 3 wie auch das untere Überströmelement 3 vertikal verlaufende Leitungsabschnitte 12 auf, an denen die jeweiligen Außenanschlüsse 4 angeordnet sind, wobei diese Leitungsabschnitte 12 abgesehen von dem jeweiligen Außenanschluss 4, von vollständig geschlossenen Bereichen der jeweiligen Außenwand 10 des Überströmelementes 3 umgeben sind. Innerhalb des Speicherhohlraums 2 erfolgt ein Ein- und/oder Ausströmen von Wärmeträgerflüssigkeit in das oder aus dem Überströmelement 3 ausschließlich durch die jeweils in einer Ebene bzw. zwischen den gedachten horizontalen Ebenen 6 und 7 angeordneten Überströmöffnungen 5.

Das untere Überströmelement 3 ist im Wesentlichen spiegelbildlich ausgebildet. Auch hier kann der Austausch von Wärmeträgerflüssigkeit zwischen dem Überströmelement 3 und dem Speicherhohlraum 2 ausschließlich über die Überströmöffnungen 5, welche wiederum alle in einer gemeinsamen Höhe angeordnet sind, erfolgen. Die beiden Außenanschlüsse 4 des unteren Überströmelementes 3 können z.B. an den Rücklauf einer Wärmequelle bzw. der Ladung und den Rücklauf eines Wärmeverbrauchers wie z.B. eines Heizkreises angeschlossen sein.

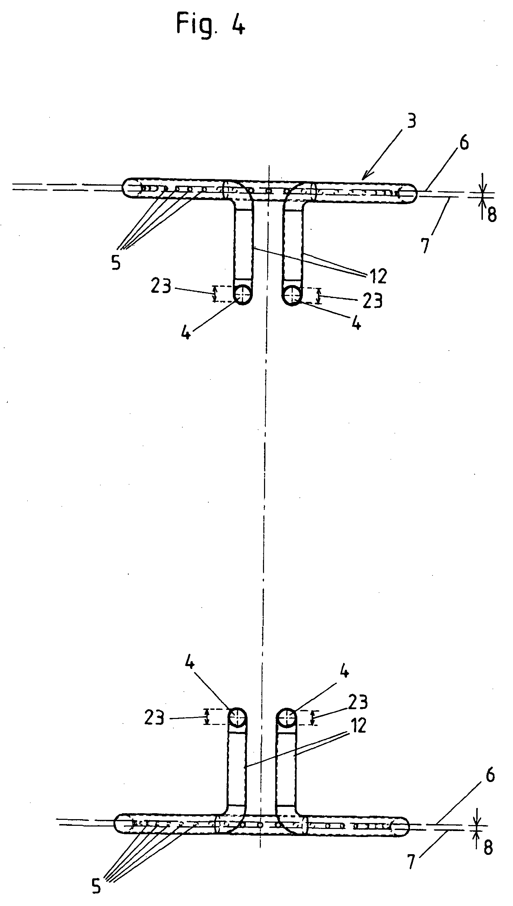

In Fig. 4 ist der Fluidspeicher 1 weggelassen. Es sind nur noch die beiden Überströmelemente 3 zu sehen. Hier sind jeweils die beiden gedachten horizontalen Ebenen 6 und 7 eingezeichnet, zwischen denen sich jeweils alle Überströmöffnungen 5 eines Überströmelementes 3 befinden. Der vertikale Abstand 8 zwischen diesen beiden horizontalen Ebenen 6 und 7, welcher den maximalen vertikalen Höhenunterschied zwischen den Überströmöffnungen 5 eines Überströmelements 3 darstellt, ist im gezeigten Ausführungsbeispiel deutlich kleiner als der Innendurchmesser 23 der jeweiligen Außenanschlüsse 4 des Überströmelementes 3. Innerhalb der Grenzen kann das Verhältnis zwischen vertikalem Abstand 8 und Innendurchmesser 23 an die jeweils geforderte Leistung bzw. Strömungsmenge für ein jeweiliges Überströmelement 3 angepasst sein. In vielen Ausgestaltungsformen der Erfindung ist es günstig, wenn der vertikale Abstand 8 maximal 7cm, vorzugsweise maximal 5cm beträgt. In den gezeigten Ausführungsbeispielen liegt er jeweils deutlich darunter.

Wie bereits eingangs erwähnt, ist es bei diesem wie auch den anderen Ausführungsbeispielen günstig, wenn die Summe der Flächen aller Überströmöffnungen 5 zumindest 3 mal und höchstens 5 mal so groß ist wie die größte, in einer Ebene 11 normal zur Strömungsrichtung durch den Innenhohlraum 9 des Überströmelements 3 messbare Querschnittsfläche des Innenhohlraums 9. In Fig. 3 ist die Querschnittsebene 11 beispielhaft eingezeichnet. Bei den dargestellten Ausführungsbeispielen ist die Querschnittsfläche durch den Innenhohlraum 9 überall gleich groß, was aber nicht zwingend so sein muss.

Der in den Fig. 3 und 4 gezeigte Fluidspeicher 1 kann auch als Kältespeicher verwendet werden. In diesem Fall werden die Rückläufe von Ladung und Kältekreis an den oberen Außenanschlüssen 4 und die Vorläufe von Ladung und Kältekreis an den unteren Außenanschlüssen 4 angeschlossen.

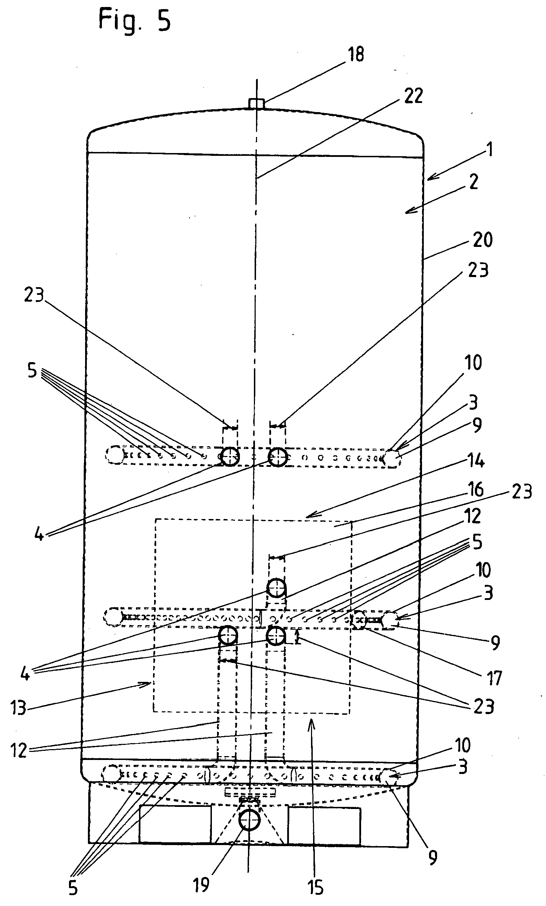

In Fig. 5 ist ein Fluidspeicher 1 in Form eines Kombispeichers dargestellt, bei dem Überströmelemente 3 zum Einsatz kommen. Ein Kombispeicher dient, wie eingangs bereits erläutert, neben der Speicherung von Wärme z.B. für Heizungsanlagen, gleichzeitig zur Erwärmung des Brauchwassers. Auch hier sind die sonstigen Wärmetauscher und an sich bekannten Einbauten im Speicherhohlraum 2 zur Vereinfachung der Darstellung weggelassen, zumal sie, wie beim Stand der Technik bekannt, ausgeführt sein können. In dem dargestellten Kombispeicher 1 gemäß Fig. 5 sind drei Überströmelemente 3 in verschiedenen Höhen und damit in verschiedenen Temperaturniveaus angeordnet. Die beiden Außenanschlüsse 4 des obersten Überströmelements 3 können z.B. an den Vorlauf der Ladung, also den Vorlauf einer Wärmequelle wie z.B. einem Heizkessel und an den Vorlauf eines Hochtemperaturheizkreises angeschlossen sein.

Das in vertikaler Richtung gesehen in der Mitte angeordnete Überströmelement 3 weist im Gegensatz zu den anderen beiden Überströmelementen 3 dieses Ausführungsbeispiels ein geschlossenes Ende 17 und nur einen Außenanschluss 4 auf. Dieser ist über einen relativ kurzen vertikalen Leitungsabschnitt 12, welcher keine Überströmöffnungen 5 aufweist, mit dem restlichen Überströmelement 3 verbunden. Dieses mittlere Überströmelement 3 kann mit seinem Außenanschluss 4 z.B. an den Rücklauf eines Hochtemperaturheizkreises angeschlossen sein.

Das unterste Überströmelement 3 dieses Ausführungsbeispiels gemäß Fig. 5 ist unmittelbar am unteren Ende des Speicherhohlraums 2 angeordnet. Seine Außenanschlüsse 4 können über die vertikalen Leitungsabschnitte 12 z.B. an einen Rücklauf eines Niedertemperaturheizkreises und an einen Rücklauf der Ladung bzw. der Wärmequelle angeschlossen sein.

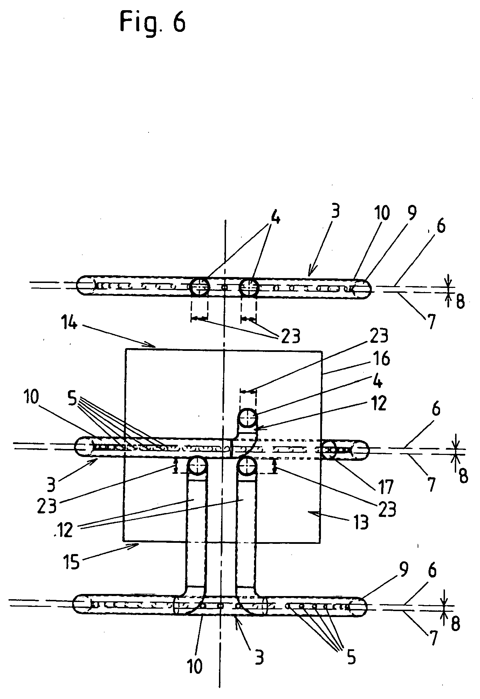

Alle drei Überströmelemente 3 dieses Ausführungsbeispiels sind so ausgeführt, dass sie bei der Einbringung und/oder Entnahme der Wärmeträgerflüssigkeit in oder aus dem Speicherhohlraum 2 die dort eingestellte Temperaturschichtung nicht stören. Die vertikalen Erstreckungen der Überströmöffnungen 5 eines jeweiligen Überströmelements 3 sind durch die gedachten horizontalen Ebenen 6 und 7 und deren vertikalen Abstand 8 in Fig. 6 eingezeichnet. Der vertikale Abstand 8 ist bei jedem Überströmelement 3 kleiner als der jeweilige Innendurchmesser 23 des jeweiligen Außenanschlusses 4 des Überströmelementes 3.

Im Speicherhohlraum gemäß Fig. 5 ist zumindest ein Strömungsleitkörper 13 angeordnet, welcher, in der Betriebsstellung gesehen, an seinem oberen Ende 14 und seinem unteren Ende 15 jeweils eine Öffnung aufweist und von einer ansonsten geschlossenen, vorzugsweise zylindermantelförmigen, Strömungsleitkörperwand 16 umgeben ist. Diese Strömungsleitkörper 13 bzw. Zargen, beschleunigen und lenken den thermischen Aufstieg von warmer Wärmeträgerflüssigkeit im Speicherhohlraum 2, sodass sich relativ rasch die gewünschte Schichtung ausbilden kann. Sie können z.B. aus Kunststoff wie z.B. Polypropylen gefertigt sein. Wie in Fig. 5 gezeigt, ist es günstig, wenn sie koaxial zu einer Mittenlängsachse 22 des Speicherhohlraums 2 angeordnet sind. Weiters ist bevorzugt, wie hier gezeigt, vorgesehen, dass die Strömungsleitkörper 13 über ihre gesamte vertikale Erstreckung einen konstanten Öffnungsquerschnitt haben. Die Strömungsleitkörper 13 können relativ dünnwandig ausgebildet sein. Ihr innerer Öffnungsquerschnitt beträgt günstigerweise zumindest die Hälfte des Querschnitts des Speicherhohlraums 2. Im gezeigten Ausführungsbeispiel ist der Strömungsleitkörper 13 in Form eines zylindermantelförmigen Rohres mit entsprechendem Durchmesser ausgebildet. Dies bietet sich vor allem dann an, wenn auch die den Speicherhohlraum 2 begrenzende Fluidspeicheraußenwand 20 ebenfalls zylindermantelförmig ausgebildet ist. Es sind natürlich aber auch andere Formen möglich.

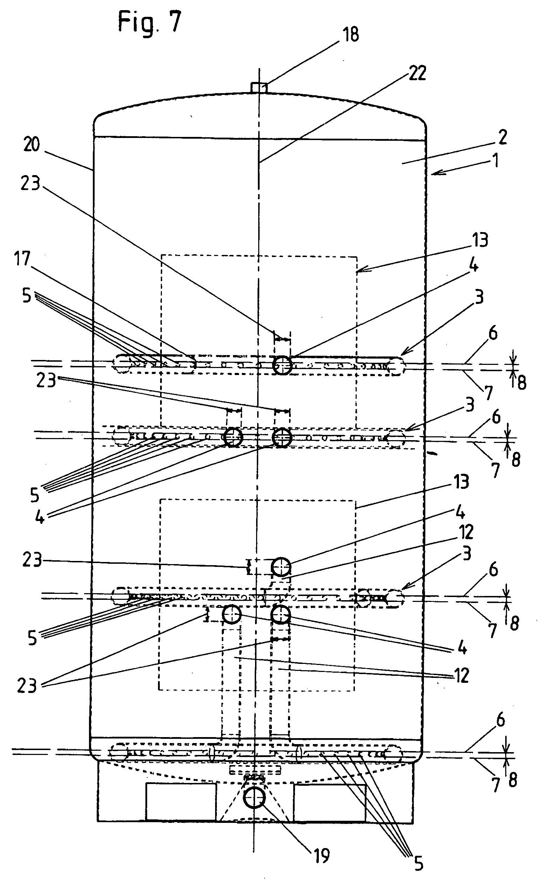

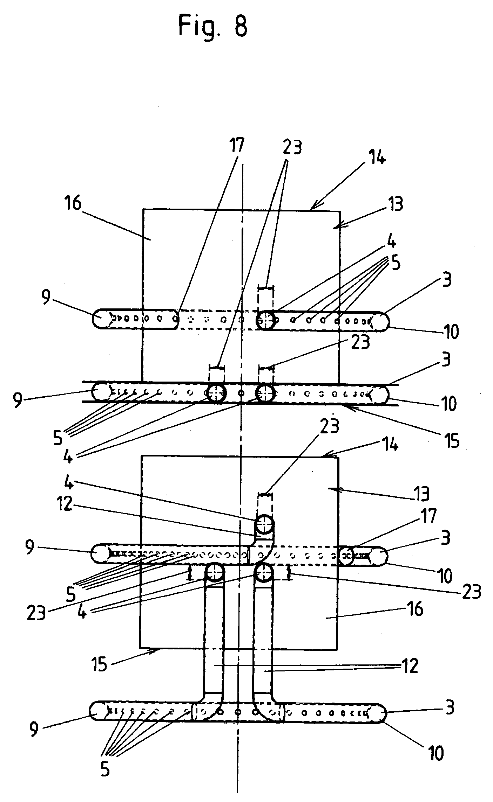

In den Fig. 7 und 8 ist ein weiteres erfindungsgemäßes Ausführungsbeispiel eines Fluidspeichers 1 in Form eines eingangs bereits erwähnten Hygienesystemspeichers gezeigt. Hier sind zwei Strömungsleitkörper 13 der geschilderten Art übereinander angeordnet. Der erfindungsgemäße Fluidspeicher 1 gemäß Fig. 7 weist insgesamt vier Überströmelemente 3 auf, welche in verschiedenen Etagen dazu dienen, aus dem Speicherhohlraum 2 Wärmeträgerflüssigkeit zu entnehmen oder in diesen geschichtet einzuspeisen, ohne die horizontale Schichtung zu stören. Die gedachten horizontalen Ebenen 6 und 7 sowie deren vertikaler Abstand 8 sind wiederum eingezeichnet. Nicht dargestellt sind die Wärmetauscher und die sonstigen beim Stand der Technik an sich bekannten Einbauten, welche sich zusätzlich im Speicherhohlraum 2 befinden. Das oberste Überströmelement 3 dieses Ausführungsbeispiels weist ein geschlossenes Ende 17 und nur einen Außenanschluss 4 auf. Dieser kann z.B. an die Rücklaufanhebung einer Brauchwasserladung angeschlossen sein. Die anderen drei, darunter angeordneten Überströmelemente 3 können wie im Ausführungsbeispiel gemäß den Fig. 5 und 6 angeschlossen sein. Die Strömungsleitkörper 13 beschleunigen wiederum den thermischen Aufstieg erwärmter Wärmeträgerflüssigkeit und damit die Ausbildung der gewünschten Schichtung. Durch die Überströmöffnungen 5 der Überströmelemente 3 wird wiederum eine horizontale strömungsberuhigte Einbringung bzw. Einschichtung und/oder Entnahme von Wärmeträgerflüssigkeit aus dem Speicherhohlraum 2 sichergestellt.

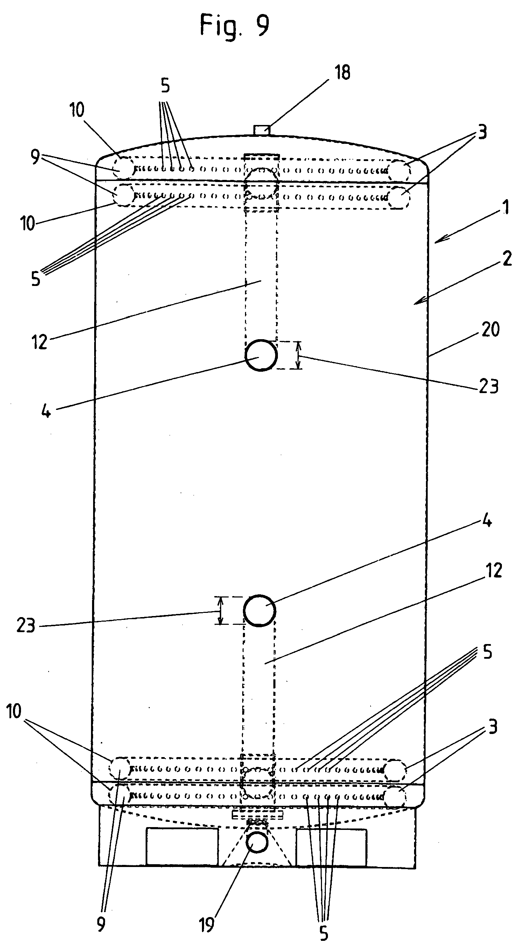

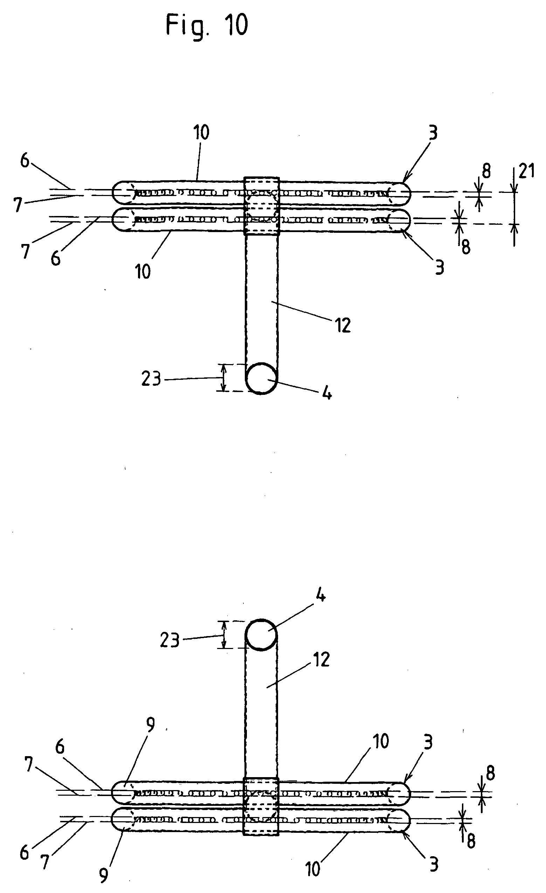

Die Fig. 9 und 10 zeigen ein weiteres Ausführungsbeispiel eines Fluidspeichers. Bei diesem werden in den Speicherhohlraum 2 des Fluidspeichers 1 größere Mengen Wärmeträgerflüssigkeit eingebracht und/oder entnommen. Um diese größeren Volumenströme realisieren zu können, ohne die Schichtung im Speicherhohlraum 2 zu stören, wird eine Art Doppelrohrsystem eingesetzt, wodurch der Volumenstrom geteilt wird. Dies stellt eine ideale Lösung für Großanlagen und industrielle Anlagen dar. In diesen Ausgestaltungsformen ist vorgesehen, dass im Speicherhohlraum 2 des Fluidspeichers 1 zumindest zwei unmittelbar übereinander angeordnete Überströmelemente 3 zur Einbringung und/oder Entnahme von Wärmeträgerflüssigkeit in und/oder aus dem Speicherhohlraum 2 angeordnet sind, wobei vorzugsweise vorgesehen ist, dass die Überströmelemente 3 zumindest einen gemeinsamen Außenanschluss 4 aufweisen. Die unmittelbar übereinander angeordneten Überströmelemente 3 können mit ihren Außenwänden 10 unmittelbar aneinander anliegen oder in vertikaler Richtung einen nur sehr geringen Abstand von vorzugsweise kleiner 1 cm aufweisen. Günstigerweise sind die beiden unmittelbar übereinander angeordneten Überströmelemente 3 so nah beieinander, dass auch der vertikale Abstand 21 zwischen der oberen horizontalen Ebene 6 des oberen Überströmelementes 3 und der unteren horizontalen Ebene 7 erfindungsgemäße Werte annimmt.

Gemäß Fig. 9 und 10 kann der gemeinsame Außenanschluss 4 der beiden oberen Überströmelemente 3 z.B. an einen Vorlauf eines Heizkreises und/oder einer Ladung bzw. Wärmequelle angeschlossen sein. Der untere gemeinsame Außenanschluss 4 der beiden unteren Überströmelemente 3 kann beispielsweise an einen Rücklauf des Heizkreises und/oder der Ladung angeschlossen sein.

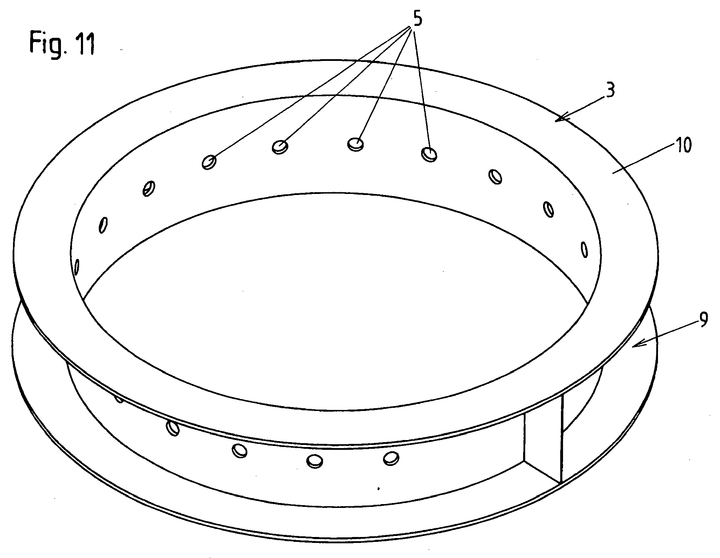

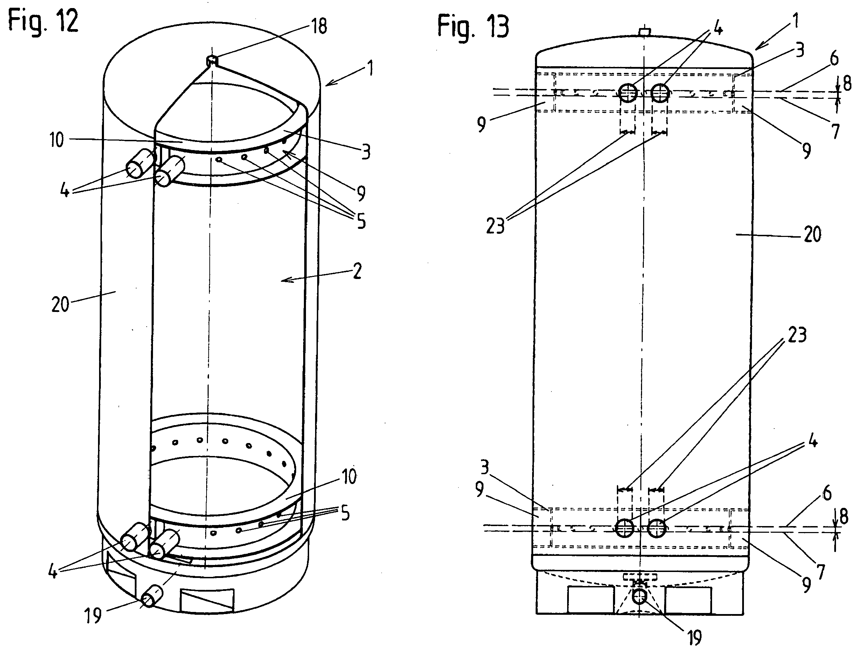

Fig. 11 bis 13 zeigen beispielhaft, dass die Überströmelemente 3 nicht zwangsläufig eine rohrförmige, also mit kreisrundem Querschnitt versehene Außenwand 10 aufweisen müssen. Beim vergrößert in Fig. 11 dargestellten Ausführungsbeispiel dieses Überströmelementes 3 weist der Innenhohlraum 9 einen rechteckigen Querschnitt auf. Auch dies ist natürlich nur ein Beispiel. Weiters ist darauf hinzuweisen, dass, wie in dieser Variante beispielhaft gezeigt, die Außenwand 10 des Überströmelementes 3 teilweise auch von der Fluidspeicheraußenwand 20 gebildet werden kann. Weiters ist in diesem Beispiel auch gezeigt, dass die Außenanschlüsse 4 des Überströmelementes 3 auch fix in der Fluidspeicheraußenwand 20 eingebaut sein können.

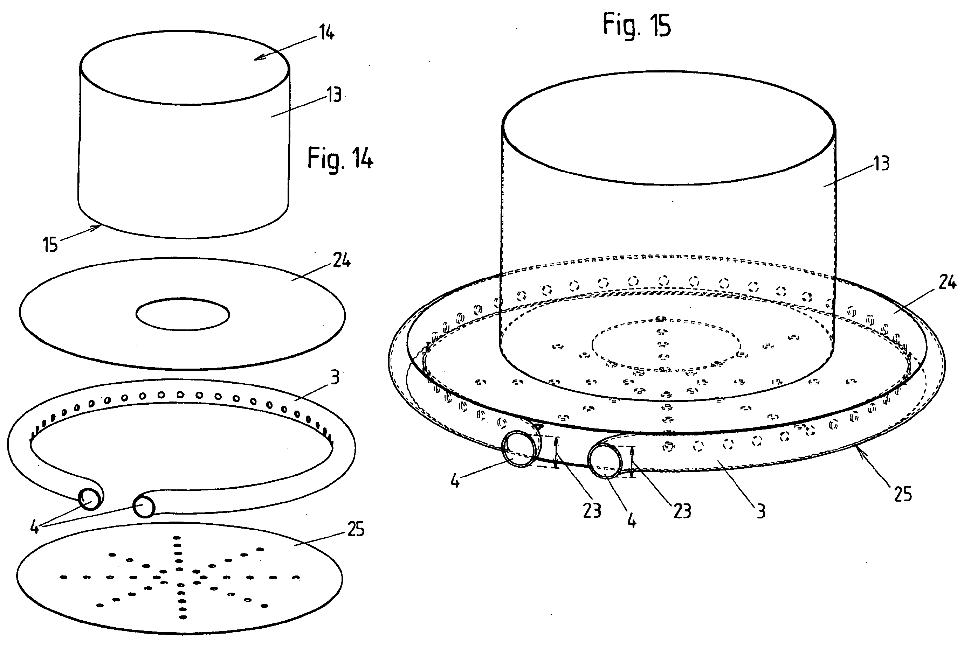

Die Fig. 14 und 15 zeigen einen Aufbau, der in allen beispielhaft hier dargestellten Fluidspeichern 1 realisiert werden kann. Zur zusätzlichen Strömungslenkung beim thermisch bedingten Auf- und Abstieg der Wärmeträgerflüssigkeit in Speicherhohlraum 2 des Fluidspeichers 1 wirkt das Überströmelement 3 in dem, in Fig. 14 in der Explosionsdarstellung und in Fig. 15 in der Montagestellung gezeigten Aufbau mit dem bereits genannten Strömungsleitkörper 13 sowie mit zwei Lochscheiben 24 und 25 zusammen. Die Lochscheiben 24 und 25 können auch als Ronden bezeichnet werden und wie der Strömungsleitkörper 13 bzw. auch das Überströmelement 3 aus Polypropylen, Edelstahl oder einem anderen geeigneten Material gebildet sein. Die obere Lochscheibe 24 weist ein größeres zentrales Loch auf und ist ansonsten geschlossen. Sie leitet das Wärmeträgermedium ins Zentrum des Speicherhohlraumes. Die große zentrale Öffnung bedingt einen optimalen thermischen Aufstieg. Bei der unteren Lochscheibe 25 sind kleinere Öffnungen über die Fläche der Lochscheibe 25 verteilt. Im gezeigten Ausführungsbeispiel sind sie sternförmig angeordnet. Die Lochscheibe 25 unterstützt die räumliche Trennung von Hoch- bzw. Normaltemperaturzone. Weiters unterstützt sie die thermische Schichtung bei dynamischen Be- und Endladezyklen zusätzlich.

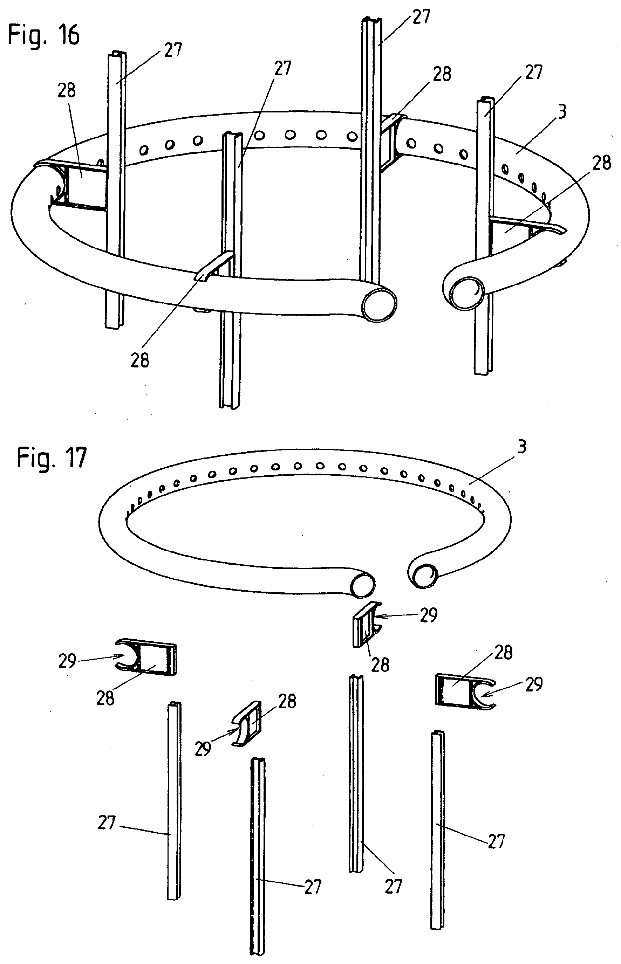

Anhand der Fig. 16 und 17 ist eine bevorzugte Art der Befestigung des Überströmelementes 3 im Speicherhohlraum 2 des Fluidspeichers dargestellt. Auch dies kann bei allen hier gezeigten Ausführungsbeispielen von Fluidspeichern 1 und deren jeweiligen Überströmelementen 3 so realisiert sein. Zur Befestigung der Überströmelemente 3 im Speicherhohlraum 2 sind in letzterem Schienen 27 angeordnet, an denen Rastelemente 28, vorzugsweise höhenverstellbar, gehalten sind. Diese Rastelemente 28 tragen wiederum Rastklauen 29, in die das jeweilige Überströmelement 3 eingeschnappt werden kann. Die Rastverbindung erleichtert eine schnelle Montage und stellt trotzdem eine sichere und dauerhafte Befestigung des Überströmelementes 3 im Speicherhohlraum 2 dar. Abweichend von der gezeigten Ausführungsform kann aber auch eine andere Befestigung des Überströmelementes 3 an entsprechenden Schienen 27 vorgesehen sein, wobei dann z. B. nur der Vorteil der Höhenverstellbarkeit genutzt wird. Andersherum ist es natürlich auch möglich, auf die Höhenverstellbarkeit zu verzichten, und rein die Vorteile der Verwendung von Rastelementen 28 zu nutzen. Der Vollständigkeit halber wird darauf hingewiesen, dass Fig. 16 den Einbauzustand zeigt, während Fig. 17 eine Explosionsdarstellung ist, in der die Einzelteile besser zu sehen sind.

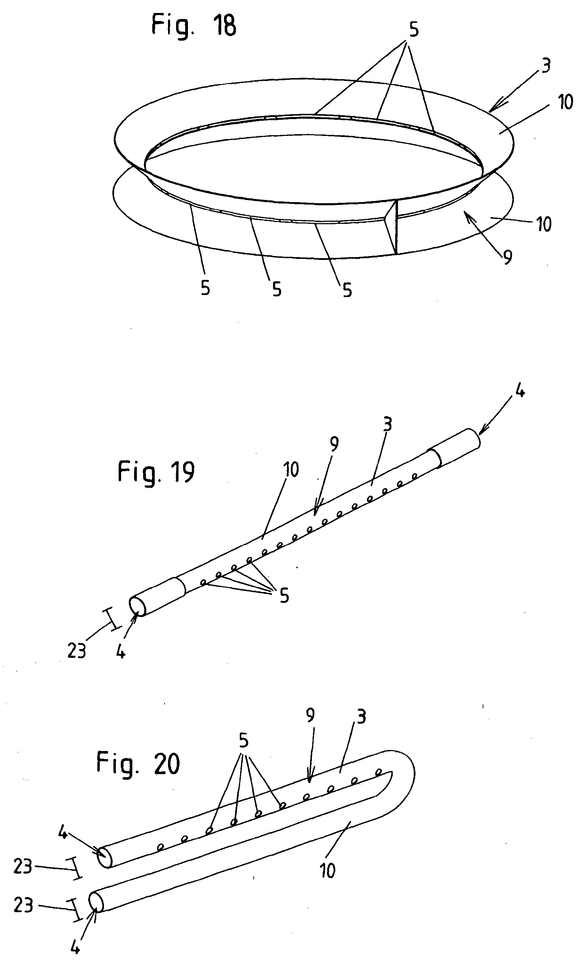

Die Fig. 18 bis 23 zeigen alternative Ausgestaltungsformen von Überströmelementen 3, bei denen, in einer Betriebsstellung des Fluidspeichers 1 gesehen, alle Überströmöffnungen 5 des Überströmelements 3 zwischen zwei horizontalen, in diesen Figuren nicht mehr eingezeichneten, Ebenen 6 und 7 angeordnet sind, wobei der vertikale Abstand 8 dieser beiden horizontalen Ebenen 6 und 7 zueinander höchstens so groß ist, wie der maximale Innendurchmesser 23 des jeweiligen Außenanschlusses 4 des Überströmelements 3. Nicht eingezeichnet ist hier auch die Ebene 11 normal zur Strömungsrichtung durch den Innenhohlraum 9 des jeweiligen Überströmelements 3. Trotzdem gilt auch für diese Ausführungsbeispiele vorzugsweise, dass die Summe der Flächen aller Überströmöffnungen 5 zumindest drei mal und höchstens fünf mal so groß ist, wie die größte, in einer Ebene 11 normal zur Strömungsrichtung durch den Innenhohlraum 9 des Überströmelementes messbare Querschnittsfläche des Innenhohlraums 9 ist.

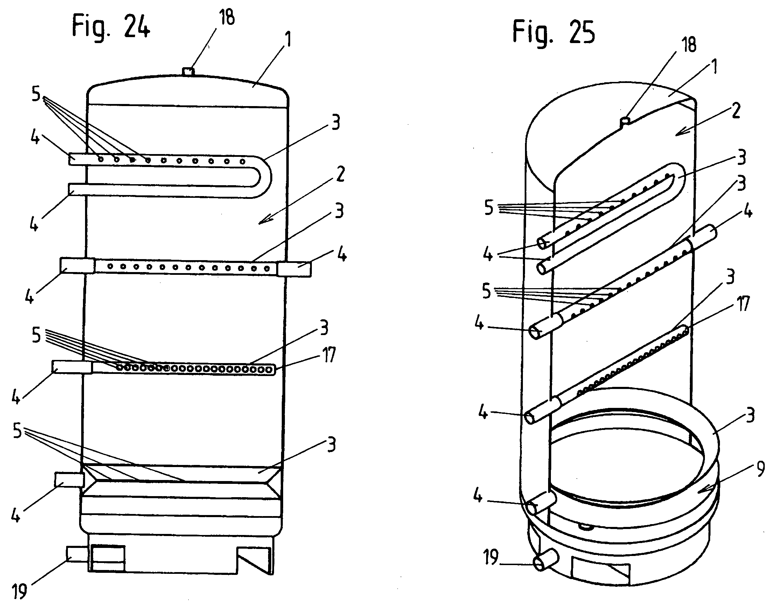

Bei dem Ausführungsbeispiel gemäß Fig. 18 wird der Innenhohlraum 9 von den beiden Außenwänden 10 und der hier nicht eingezeichneten Innenwand des Fluidspeichers 1 begrenzt. Hier nicht eingezeichnet sind ebenfalls Außenanschlüsse 4. Deren Anordnung kann aber beispielhaft Fig. 24 und 25 entnommen werden. Auch dieses Ausführungsbeispiel gemäß Fig. 18 kann mit einem aber auch mit zwei Außenanschlüssen 4 versehen sein. Die Überströmöffnungen 5 dieses Ausführungsbeispiels eines Überströmelements 3 gemäß Fig. 18 sind schlitzartig ausgebildet und ermöglichen ein Ausströmen nach innen in den von dem ringförmigen Überströmelement 3 umgebenen Bereich des Speicherhohlraums 2. Dasselbe gilt natürlich auch für eine entsprechende Entnahme, bei der aus dem Speicherhohlraum 2 Flüssigkeit durch die Überströmöffnungen 5 in den Innenhohlraum 10 des Überströmelements 3 einströmt.

In Fig. 19 ist als weitere Alternative ein linear rohrförmig ausgebildetes Überströmelement 3 mit zwei einander gegenüber liegenden Außenanschlüssen 4 gezeigt. Die Überströmöffnungen 5 liegen wiederum zwischen den hier nicht eingezeichneten, im Betriebszustand horizontal verlaufenden begrenzenden Ebenen 6 und 7. In Fig. 20 handelt es sich um ein U-förmig ausgebildetes Überströmelement 3, in dessen oberem Schenkel die Überströmöffnungen 5 angeordnet sind. Auch dieses Ausführungsbeispiel gemäß Fig. 20 hat zwei Außenanschlüsse 4. Bei allen hier gezeigten Ausführungsbeispielen, welche zumindest zwei Außenanschlüsse 4 und entsprechende Überströmöffnungen 5 haben, kann das Überströmelement 3 als sogenannte Schichtweiche eingesetzt werden, da von einem der Außenanschlüsse 4 kommend, die Wärmeträgerflüssigkeit entweder durch die Überströmöffnungen 5 hindurchströmen oder dem anderen Außenanschluss 4 zugeführt werden kann. Entsprechendes gilt natürlich für Einbringung und Entnahme der Wärmeträgerflüssigkeit. Solche Schichtweichen können als automatische, sich selbst regelnde Regelglieder bei der Einbringung und/oder Entnahme der Wärmeträgerflüssigkeit in oder aus dem Speicherhohlraum 2 eingesetzt werden. Weiters unterstützen sie die horizontale Schichtung im Speicherhohlraum 2.

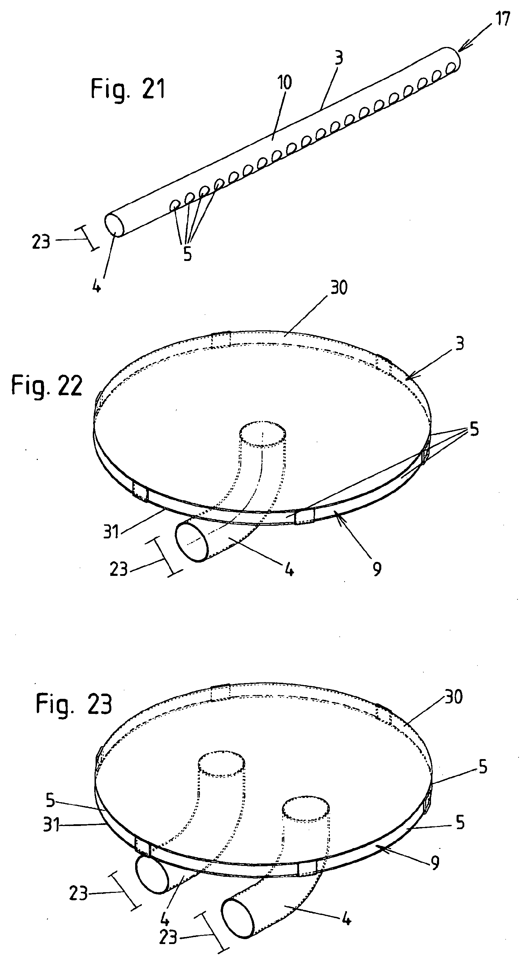

In Fig. 21 ist ein weiteres Überströmelement 3 gezeigt, bei dem allerdings nur ein Außenanschluss 4 vorhanden ist. Das gegenüberliegende Ende des rohrförmigen Überströmelementes 3 weist ein angeschlossenes Ende 17 auf. Mit diesen Überströmelementen 3 wird also in der Regel keine Weichenfunktion ausgeübt.

Fig. 22 und 23 zeigen weitere Alternativen zur Ausgestaltung von Überströmelementen 3. Hier sind die Überströmöffnungen 5 zwischen einer oberen und einer unteren Platte 30 und 31 angeordnet. Das Wärmeträgerfluid strömt also entweder vom Innenhohlraum 9 sternförmig nach außen in den Speicherhohlraum 2 oder in umgekehrter Richtung vom Speicherhohlraum 2 in den Innenhohlraum 9 ein. In Fig. 22 besitzt das Überströmelement 3 einen Außenanschluss 4, in Fig. 23 zwei Außenanschlüsse 4. Fig. 23 ist somit wiederum für die geschilderte Weichenfunktion einsetzbar. Die den vertikalen Abstand 8 definierenden horizontalen Ebenen 6 und 7 sind auch in Fig. 22 und 23 nicht eingezeichnet, sie fallen aber im Wesentlichen mit den entsprechenden Begrenzungsflächen der oberen und unteren Platten 30 und 31 zusammen.

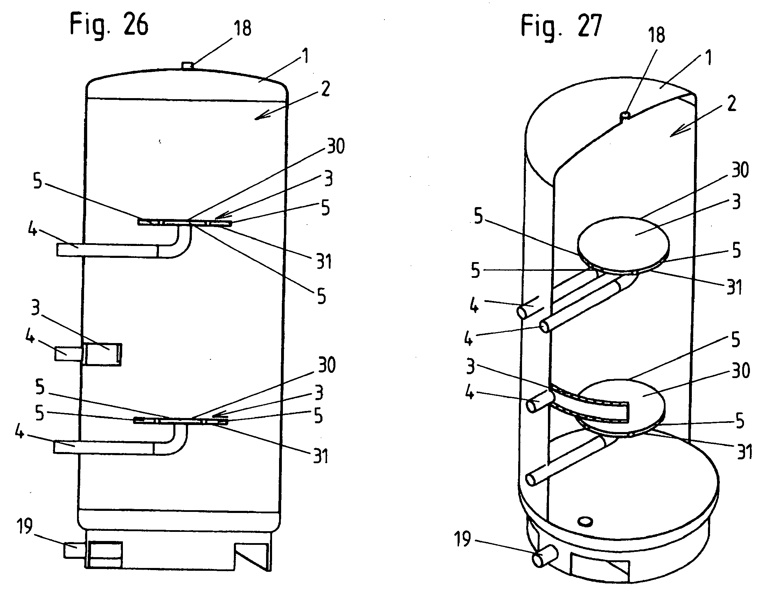

Die Fig. 24 bis 25 zeigen beispielhaft einen Fluidspeicher 1, in dessen Speicherhohlraum 2 die Ausführungsvarianten der Überströmelemente 3 gemäß der Fig. 18 bis 21 eingebaut sind. Fig. 24 zeigt eine Art gläserne Darstellung, in der die Überströmelemente 3 im Speicherhohlraum 2 zu sehen sind. Fig. 25 zeigt einen aufgeschnittenen Speicher 1 in perspektivischer Darstellung. In Fig. 26 und 27 sind entsprechende Darstellungen eines Fluidspeichers 1 mit den Überströmelementen 3 gemäß Fig. 23 und 22 gezeigt. Diese bilden jeweils die oberen und unteren Überströmelemente 3. In der Mitte findet sich ein weiterer Typ eines Überströmelements 3. Dieser kann z.B. aus einem Kreisbogenabschnitt des in Fig. 18 gezeigten Ausführungsbeispiels gebildet sein.

### Legende zu den Hinweisziffern:

- 1: Fluidspeicher
- 2: Speicherhohlraum
- 3: Überströmelement
- 4: Außenanschluss
- 5: Überströmöffnung
- 6: horizontale Ebene
- 7: horizontale Ebene
- 8: vertikaler Abstand
- 9: Innenhohlraum
- 10: Außenwand
- 11: Ebene
- 12: Leitungsabschnitt
- 13: Strömungsleitkörper
- 14: oberes Ende
- 15: unteres Ende
- 16: Strömungsleitkörperwand
- 17: geschlossenes Ende
- 18: Entlüftung
- 19: Entleerung
- 20: Fluidspeicheraußenwand
- 21: Abstand
- 22: Mittenlängsachse
- 23: Innendurchmesser
- 24: Lochscheibe
- 25: Lochscheibe
- 26: Durchströmöffnung
- 27: Schiene
- 28: Rastelement
- 29: Rastklaue
- 30: obere Platte
- 31: untere Platte

## Patentansprüche

1. Fluidspeicher (1) zum geschichteten Speichern zumindest einer Wärmeträgerflüssigkeit in einem Speicherhohlraum (2) des Fluidspeichers (1), wobei im Speicherhohlraum (2) des Fluidspeichers (1) zumindest ein Überströmelement (3) zur Einbringung und/oder Entnahme von Wärmeträgerflüssigkeit in und/oder aus dem Speicherhohlraum (2) angeordnet ist und das Überströmelement (3) zumindest einen Außenanschluss (4) zur Verbindung des Überströmelements (3) mit außerhalb des Speicherhohlraums (2), insbesondere außerhalb des Fluidspeichers (1), liegenden Leitungen aufweist und das Überströmelement (3) zusätzlich eine Vielzahl von Überströmöffnungen (5) zur Einbringung der Wärmeträgerflüssigkeit aus dem Überströmelement (3) in den Speicherhohlraum (2) und/oder zur Entnahme der Wärmeträgerflüssigkeit aus dem Speicherhohlraum (2) in das Überströmelement (3) aufweist, wobei die Überströmöffnungen (5) in den Speicherhohlraum (2) münden, und alle Überströmöffnungen (5) des Überströmelements (3), in einer Betriebsstellung des Fluidspeichers (1) gesehen, zwischen zwei horizontalen Ebenen (6, 7) angeordnet sind, wobei der vertikale Abstand (8) dieser beiden horizontalen Ebenen (6, 7) zueinander höchstens so groß ist, wie der maximale Innendurchmesser (23) des Außenanschlusses (4) des Überströmelementes (3), **dadurch gekennzeichnet, dass** im Speicherhohlraum (2) zumindest ein Strömungsleitkörper (13) angeordnet ist, welcher, in der Betriebsstellung gesehen, an seinem oberen Ende (14) und seinem unteren Ende (15) jeweils eine Öffnung aufweist und von einer ansonsten geschlossenen, in der Betriebsstellung in Vertikalrichtung längs erstreckten Strömungsleitkörperwand (16) umgeben ist.

2. Fluidspeicher (1) nach Anspruch 1, **dadurch gekennzeichnet, dass** das Überströmelement (3) einen Innenhohlraum (9) aufweist, in den sowohl der Außenanschluss (4), vorzugsweise alle Außenanschlüsse (4), als auch alle Überströmöffnungen (5) münden.

3. Fluidspeicher (1) nach Anspruch 2, **dadurch gekennzeichnet, dass** der Innenhohlraum (9) abgesehen von den Überströmöffnungen (5) und dem Außenanschluss (4) oder den Außenanschlüssen (4) von einer geschlossenen Außenwand (10) des Überströmelements (3) umgeben ist.

4. Fluidspeicher (1) nach Anspruch 3, **dadurch gekennzeichnet, dass** die Außenwand (10) Kunststoff, vorzugsweise Polypropylen, oder Stahl, vorzugsweise Edelstahl, aufweist oder daraus besteht.

5. Fluidspeicher (1) nach einem der Ansprüche 2 bis 4, **dadurch gekennzeichnet, dass** die Summe der Flächen aller Überströmöffnungen (5) zumindest 3 mal und höchstens 5 mal so groß ist wie die größte, in einer Ebene (11) normal zur Strömungsrichtung durch den Innenhohlraum (9) des Überströmelements (3) messbare Querschnittsfläche des Innenhohlraums (9).

6. Fluidspeicher (1) nach einem der Ansprüche 1 bis 5, **dadurch gekennzeichnet, dass** das Überströmelement (3) genau einen Außenanschluss (4) oder genau zwei Außenanschlüsse (4) aufweist.

7. Fluidspeicher (1) nach einem der Ansprüche 1 bis 6, **dadurch gekennzeichnet, dass** das Überströmelement (3) zumindest bereichsweise, vorzugsweise vollständig, als, vorzugsweise zumindest abschnittsweise kreisringförmige, Rohrleitung ausgebildet ist.

8. Fluidspeicher (1) nach einem der Ansprüche 1 bis 7, **dadurch gekennzeichnet, dass** das Überströmelement (3) zumindest einen, in der Betriebsstellung gesehen, zumindest auch vertikal verlaufenden Leitungsabschnitt (12) aufweist, an dem der Außenanschluss (4) oder einer der Außenanschlüsse (4) angeordnet ist, wobei dieser Leitungsabschnitt (12), abgesehen von dem Außenanschluss (4) oder den Außenanschlüssen (4) von einem vollständig geschlossenen Bereich der Außenwand (10) des Überströmelements (3) umgeben ist.

9. Fluidspeicher (1) nach einem der Ansprüche 1 bis 8, **dadurch gekennzeichnet, dass** im Speicherhohlraum (2) des Fluidspeichers (1) zwei unmittelbar übereinander angeordnete Überströmelemente (3) zur Einbringung und/oder Entnahme von Wärmeträgerflüssigkeit in und/oder aus dem Speicherhohlraum (2) angeordnet sind, wobei vorzugsweise vorgesehen ist, dass die Überströmelemente (3) zumindest einen gemeinsamen Außenanschluss (4) aufweisen.

10. Fluidspeicher (1) nach einem der Ansprüche 1 bis 9, **dadurch gekennzeichnet, dass** die Strömungsleitkörperwand (16) zylindermantelförmig ist.

## Claims

1. A fluid reservoir (1) for the layered storage of at least one heat transfer fluid in a reservoir cavity (2) of the fluid reservoir (1), wherein in the reservoir cavity (2) of the fluid reservoir (1) there is arranged at least one overflow element (3) to introduce and/or remove heat transfer fluid into and/or from the reservoir cavity (2) and the overflow element (3) has at least one external connection (4) to connect the overflow element (3) to lines lying outside of the reservoir cavity (2), in particular outside of the fluid reservoir (1), and the overflow element (3) additionally has a plurality of overflow openings (5) to introduce the heat transfer fluid from the overflow element (3) into the reservoir cavity (2) and/or to remove the heat transfer fluid from the reservoir cavity (2) into the overflow element (3), wherein the overflow openings (5) open into the reservoir cavity (2), and, viewed in an operating position of the fluid reservoir (1), all overflow openings (5) of the overflow element (3) are arranged between two horizontal planes (6, 7), wherein the vertical spacing (8) of these two horizontal planes (6, 7) from one another is at most as great as the maximum inner diameter (23) of the external connection (4) of the overflow element (3), **characterized in that** arranged in the reservoir cavity (2) there is at least one flow guide body (13) which, viewed in the operating position, has a respective opening at its upper end (14) and its lower end (15) and is surrounded by a flow guide body wall (16) which is closed otherwise and extended longitudinally in the vertical direction in the operating position.

2. A fluid reservoir (1) according to claim 1, **characterized in that** the overflow element (3) has an inner cavity (9) into which open both the external connection (4), preferably all external connections (4), and all overflow openings (5).

3. A fluid reservoir (1) according to claim 2, **characterized in that** the inner cavity (9), apart from the overflow openings (5) and the external connection (4) or the external connections (4), is surrounded by a closed outer wall (10) of the overflow element (3).

4. A fluid reservoir (1) according to claim 3, **characterized in that** the outer wall (10) has or consists of plastics material, preferably polypropylene, or steel, preferably fine steel.

5. A fluid reservoir (1) according to any one of claims 2 to 4, **characterized in that** the sum of the areas of all overflow openings (5) is at least 3 times and at most 5 times as great as the greatest cross-sectional area, measurable in a plane (11) normal to the flow direction through the inner cavity (9) of the overflow element (3), of the inner cavity (9).

6. A fluid reservoir (1) according to any one of claims 1 to 5, **characterized in that** the overflow element (3) has exactly one external connection (4) or exactly two external connections (4).

7. A fluid reservoir (1) according to any one of claims 1 to 6, **characterized in that** the overflow element (3) is at least in regions, preferably completely, in the form of a pipe at least portions of which are preferably circular-ring-shaped.

8. A fluid reservoir (1) according to any one of claims 1 to 7, **characterized in that** the overflow element (3) has at least one line portion (12) at least also vertically running viewed in the operating position, on which line portion (12) there is arranged the external connection (4) or one of the external connections (4), wherein this line portion (12), apart from the external connection (4) or the external connections (4), is surrounded by a completely closed region of the outer wall (10) of the overflow element (3).

9. A fluid reservoir (1) according to any one of claims 1 to 8, **characterized in that** in the reservoir cavity (2) of the fluid reservoir (1) there are arranged two overflow elements (3), arranged directly one above the other, to introduce and/or remove heat transfer fluid into and/or from the reservoir cavity (2), wherein it is preferably provided that the overflow elements (3) have at least one common external connection (4).

10. A fluid reservoir (1) according to any one of claims 1 to 9, **characterized in that** the flow guide body wall (16) is the shape of a cylinderjacket.

## Revendications

1. Réservoir de fluide (1) permettant le stockage par couches d'au moins un liquide caloporteur dans une cavité de stockage (2) du réservoir de fluide (1), au moins un élément d'écoulement (3) pour l'introduction et/ou le prélèvement de liquide caloporteur dans et/ou de la cavité de stockage (2) étant agencé dans la cavité de stockage (2) du réservoir de fluide (1) et l'élément d'écoulement (3) comprenant au moins un raccord extérieur (4) permettant de relier l'élément d'écoulement (3) à des conduites situées à l'extérieur de la cavité de stockage (2), en particulier à l'extérieur du réservoir de fluide (1), et l'élément d'écoulement (3) comprenant en outre une pluralité d'ouvertures d'écoulement (5) permettant d'introduire le liquide caloporteur de l'élément d'écoulement (3) dans la cavité de stockage (3) et/ou de prélever le liquide caloporteur de la cavité de stockage (2) dans l'élément d'écoulement (3), les ouvertures d'écoulement (5) débouchant dans la cavité de stockage (2), et toutes les ouvertures d'écoulement (5) de l'élément d'écoulement, vu dans une position de fonctionnement du réservoir de fluide (1), étant ménagées entre deux plans horizontaux (6, 7), la distance axiale (8) entre ces deux plans horizontaux (6, 7) ne devant pas dépasser le diamètre intérieur maximal (23) du raccord extérieur (4) de l'élément d'écoulement (3), **caractérisé en ce qu'**au moins un corps de guidage de flux (13) est agencé dans la cavité de stockage (2), lequel, vu dans la position de fonctionnement, comprend à son extrémité supérieure (14) et à son extrémité inférieure (15) respectivement une ouverture et est entouré par une paroi (16) de corps de guidage de flux s'étendant longitudinalement dans le sens vertical dans la position de fonctionnement et par ailleurs fermée,.

2. Réservoir de fluide (1) selon la revendication 1, **caractérisé en ce que** l'élément d'écoulement (3) comprend une cavité intérieure (9) dans laquelle débouchent aussi bien le raccord extérieur (4), de préférence tous les raccords extérieurs (4), que toutes les ouvertures d'écoulement (5).

3. Réservoir de fluide (1) selon la revendication 2, **caractérisé en ce que** la cavité intérieure (9) est entourée par une paroi extérieure (10) fermée de l'élément d'écoulement (3), à l'exception des ouvertures d'écoulement (5) et du raccord extérieur (4) ou des raccords extérieurs (4).

4. Réservoir de fluide (1) selon la revendication 3, **caractérisé en ce que** la paroi extérieure (10) comporte de la matière plastique, de préférence du polypropylène, ou de l'acier, de préférence de l'acier inoxydable, ou en est constituée.

5. Réservoir de fluide (1) selon l'une quelconque des revendications 2 à 4, **caractérisé en ce que** la somme des surfaces de toutes les ouvertures d'écoulement (5) est au moins 3 fois et au maximum 5 fois supérieure à la plus grande surface transversale de la cavité intérieure (9) pouvant être mesurée à travers la cavité intérieure (9) de l'élément d'écoulement (3) dans un plan (11) perpendiculaire à la direction d'écoulement.

6. Réservoir de fluide (1) selon l'une quelconque des revendications 1 à 5, **caractérisé en ce que** l'élément d'écoulement (3) comprend exactement un raccord extérieur (4) ou exactement deux raccords extérieurs (4).

7. Réservoir de fluide (1) selon l'une quelconque des revendications 1 à 6, **caractérisé en ce que** l'élément d'écoulement (3) est réalisé au moins par endroits, de préférence intégralement, sous la forme d'une conduite tubulaire de préférence en forme d'anneau circulaire au moins sur certaines parties.

8. Réservoir de fluide (1) selon l'une quelconque des revendications 1 à 7, **caractérisé en ce que** l'élément d'écoulement (3) comprend au moins une section de guidage (12) s'étendant au moins également verticalement, vu dans la position de fonctionnement, sur laquelle le raccord extérieur (4) ou l'un des raccords extérieurs (4) est agencé, cette section de guidage (12) étant entourée par une zone complètement fermée de la paroi extérieure (10) de l'élément d'écoulement (3), à l'exception du raccord extérieur (4) ou des raccords extérieurs (4).

9. Réservoir de fluide (1) selon l'une quelconque des revendications 1 à 8, **caractérisé en ce que** deux éléments d'écoulement (3) directement superposés et destinés à introduire le liquide caloporteur dans la cavité de stockage (2) et/ou à l'en prélever sont agencés dans la cavité de stockage (2) du réservoir de fluide (1), de préférence de telle sorte que les éléments d'écoulement (3) comprennent au moins un raccord extérieur (4) commun.

10. Réservoir de fluide (1) selon l'une quelconque des revendications 1 à 9, **caractérisé en ce que** la paroi (16) du corps de guidage d'écoulement est en forme d'enveloppe cylindrique.
